**Europäisches Patentamt**

**European Patent Office**

**Office européen des brevets**

(19)

(11) Numéro de publication : **0 402 235 B1**

# (12) FASCICULE DE BREVET EUROPEEN

(45) Date de publication du fascicule du brevet :
23.12.92 Bulletin 92/52

(51) Int. Cl.⁵ : **E05D 3/06**

(21) Numéro de dépôt : **90401515.3**

(22) Date de dépôt : **05.06.90**

(54) **Charnière associée à un capot mobile, notamment pour nacelle de moteur d'avion.**

(30) Priorité : **07.06.89 FR 8907516**

(43) Date de publication de la demande :
**12.12.90 Bulletin 90/50**

(45) Mention de la délivrance du brevet :
**23.12.92 Bulletin 92/52**

(84) Etats contractants désignés :
**BE DE ES FR GB GR IT SE**

(56) Documents cités :
**DE-A- 2 551 536**
**US-A- 2 355 542**
**US-A- 4 044 973**
**US-A- 4 083 082**

(73) Titulaire : **HISPANO-SUIZA Société anonyme dite:**
**333, Bureaux de la Colline**
**F-92213 Saint Cloud (FR)**

(72) Inventeur : **Marescot, Jean-Marc Daniel Louis**
**18, allée Saint Léonard**
**F-76610 Le Havre (FR)**
Inventeur : **Soulier, Pascal-Marie, Paul Marcel**
**45, rue Lesueur**
**F-76600 Le Havre (FR)**

(74) Mandataire : **Moinat, François et al**
**S.N.E.C.M.A. Service des Brevets Boîte Postale 81**
**F-91003 Evry Cédex (FR)**

EP 0 402 235 B1

Jouve, 18, rue Saint-Denis, 75001 PARIS

**Description**

La présente invention concerne une charnière associée à un capot dont elle permet l'ouverture et la fermeture ainsi qu'un verrouillage en position fermée, un tel capot faisant notamment partie d'une nacelle pour moteur d'avion.

Dans le montage d'un moteur sur un avion, le moteur est habituellement associé à une nacelle qui forme un carénage de protection dont la surface externe est aérodynamiquement profilée pour réduire les effets de trainée et constitue également une canalisation de circulation d'air. Dans sa définition générale, une nacelle comporte notamment certaines parties fixes associées aux moyens de liaison et structures de fixation entre avion et moteur ainsi qu'au moins un capot mobile.

On connaît ainsi par US-A 4 585 189 un capotage mobile intégré dans une nacelle de moteur d'avion et susceptible de s'ouvrir par pivotement autour d'une articulation sous l'action d'une bielle manoeuvrée par un vérin. Un équilibrage mutuel est prévu entre deux parties de capotage, s'ouvrant respectivement l'une vers le haut et l'autre vers le bas.

On connaît également divers dispositifs de verrouillage, notamment pour panneaux ou éléments de nacelle. FR-A 2 569 756 décrit par exemple un verrou comportant une biellette de liaison entre le pène et son organe de manoeuvre.. US-A-3 541 794 ou US-A 4 044 973 montrent des capotages ouvrant par pivotement de deux parties autour d'une articulation, le verrouillage étant obtenu lors de la fermeture par des dispositifs placés en position diamétralement opposée par rapport aux dites articulations.

Le but de l'invention est d'obtenir une charnière de capot qui autorise un grand angle d'ouverture tout en assurant, en position de capot fermé, un verrouillage, capable notamment de résister à une forte pression interne sur ledit capot sans que celle-ci ne provoque un début d'ouverture de telle manière que les moyens de verrouillage sont directement intégrés à la charnière et constituent un ensemble de masse et d'encombrement réduits.

Ces résultats sont obtenus de manière avantageuse et améliorée par rapport aux solutions connues antérieures, selon l'invention, au moyen d'une charnière de capot, comportant des moyens de fixation sur une ferrure fixe et coopérant avec des moyens de verrouillage, caractérisée en ce qu'elle se compose d'une bielle principale dont une première extrémité est articulée sur ladite ferrure au moyen d'un axe et une deuxième extrémité est articulée sur ledit capot mobile au moyen d'un axe et d'au moins une bielle secondaire également articulée à une extrémité au moyen d'un axe sur ladite ferrure et à l'autre extrémité, au moyen d'un axe, sur ledit capot mobile lesdits quatres axes étant disposés de manière que leurs traces respectives sur un plan coupant perpendiculairement les quatres axes forment les sommets d'un quadrilatère lorsque la charnière se trouve en position d'ouverture et en ce que les moyens de verrouillage sont fixés sur ladite ferrure fixe et comportent au moins un élément mobile de verrou qui lors de la fermeture est susceptible d'emprisonner un élément de ladite charnière assurant son verrouillage et d'être bloqué par un autre élément de ladite charnière.

Avantageusement, la charnière comporte deux bielles secondaires disposées de part et d'autre de la bielle principale et les moyens de verrouillage comportent un crochet fixé sur ladite ferrure et qui, en position de fermeture, emprisonne l'extrémité des bielles secondaires située du côté du capot et se trouve bloqué par un ergot porté par ladite deuxième extrémité de la bielle principale.

D'autres modes de réalisation selon l'invention sont indiqués dans les revendications dépendantes 2-9.

D'autres caractéristiques et avantages de l'invention seront mieux compris à la lecture de la description qui va suivre d'un mode de réalisation de l'invention, en référence aux dessins annexés sur lesquels :

- la figure 1 représente, selon une vue schématique en coupe par un plan transversal perpendiculaire à l'axe longitudinal d'un moteur ou autre ensemble mécanique un capot équipé d'une charnière conforme à l'invention, dans une position fermée ;

- la figure 1a représente, selon une vue analogue à celle de la figure 1, l'ensemble capot-charnière de la figure 1 dans une position de pleine ouverture ;

- la figure 2 représente, selon une vue en perspective détaillée à plus grande échelle, la charnière des figures 1 et 1a, en position d'ouverture ;

- la figure 3 représente un détail agrandi de la figure 1 montrant la charnière en position fermée et verrouillée ;

- la figure 4 représente, selon une vue analogue à celle de la figure 3, la charnière en position déverrouillée, à un premier stade de l'ouverture ;

- la figure 5, représente, selon une vue analogue à celle des figures 3 et 4, la charnière dans une position intermédiaire ;

- la figure 6 représente un détail agrandi de la figure 1a montrant la charnière en position de pleine ouverture.

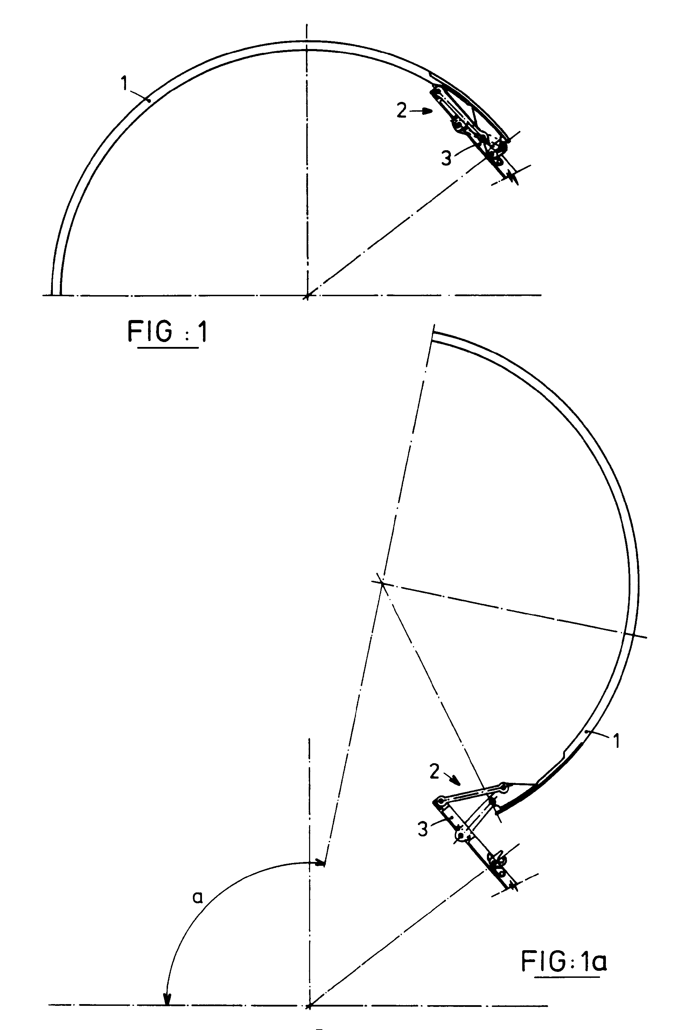

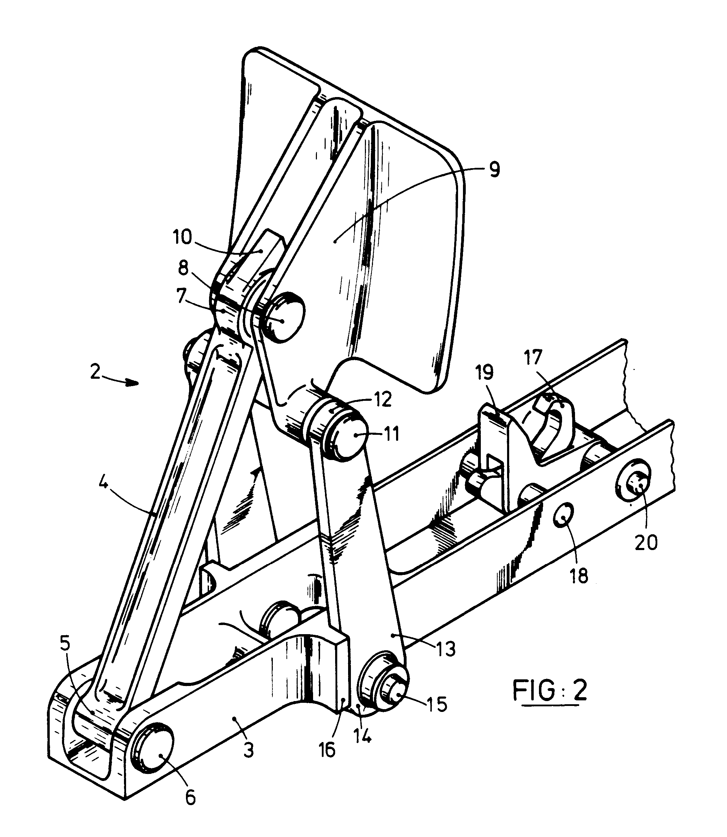

Un capot mobile 1 qui forme une partie de nacelle pour moteur d'avion à titre d'exemple d'application, mais peut être destiné à protéger en carrossant tout ensemble mécanique nécessitant un accès est schématiquement représenté sur la figure 1 en position fermée et sur la figure 1a en position ouverte. Ledit capot mobile 1 pour passer de ladite position fermée à ladite position ouverte et réciproquement est susceptible de pivoter sous l'effet de moyens d'actionnement connus en soi, de nature mécanique, hydraulique ou pneumatique par exemple, et qui n'ont pas été représentés sur les dessins, autour d'au moins une charnière 2 réalisée conformément à l'invention. Ladite charnière 2 est sur un bord dudit capot mobile 1 et est fixée sur une ferrure fixe 3 qui supporte par son intermédiaire ledit capot mobile 1. Comme représenté en détails sur la figure 2, la charnière 2 se compose d'une bielle principale 4, articulée à une première extrémité 5, autour d'un axe 6, sur ladite ferrure fixe 3 et à une deuxième extrémité 7, autour d'un axe 8, sur une chape 9 solidaire du capot mobile 1. Ladite deuxième extrémité 7 de la bielle principale 4 est prolongée par un ergot 10 dont la fonction sera précisée plus loin. Ladite chape mobile 9 porte également l'axe 11 sur lequel s'articule une extrémité 12 de deux bielles secondaires 13, disposées respectivement de part et d'autre de la bielle principale 4 et dont l'autre extrémité 14 est articulée autour d'un axe 15 également monté sur la ferrure fixe 3. Les traces desdits axes d'articulation 6, 8, 11 et 15 des bielles 4 et 13 sur un plan perpendiculaire aux axes forment ainsi les sommets d'un quadrilatère dont les bielles 4 et 13 forment respectivement un côté. La ferrure fixe 3 porte un élément formant butée 16 susceptible de coopérer avec chacune des bielles secondaires 13. Ladite charnière 2 est associée à des moyens de verrouillage qui comportent un crochet 17 mobile en rotation autour d'un axe 18 porté par la ferrure fixe 3 et un élément formant rampe de guidage 19 qui est fixé sur la ferrure fixe 3 au moyen d'un axe 20.

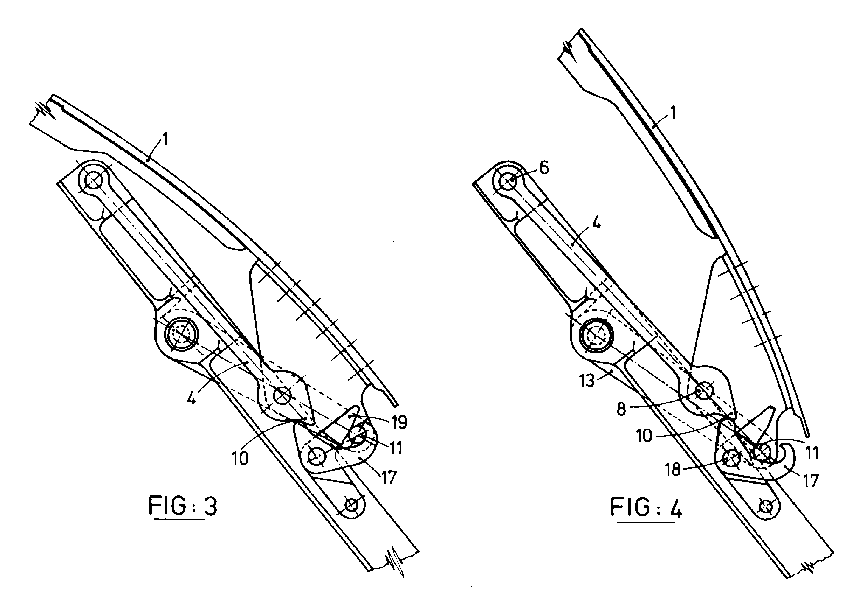

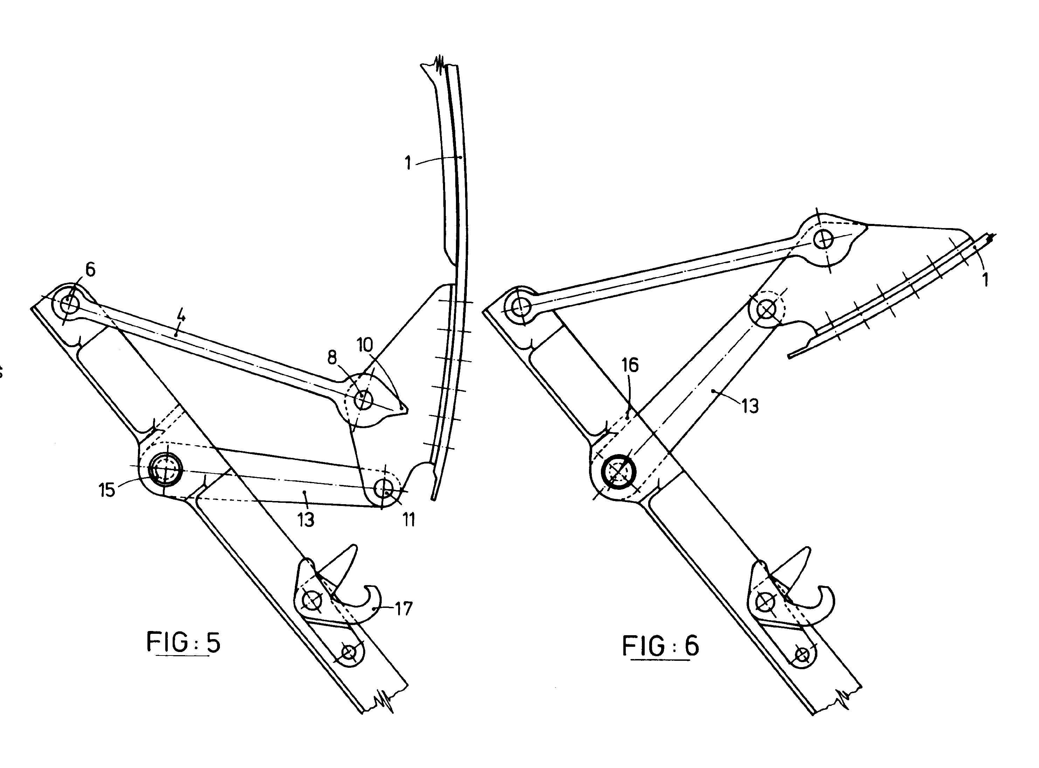

Le fonctionnement de la charnière 2 et du verrouillage associé se déduit aisément de la description qui en a été faite en référence aux figures 1, 1a et 2. Pour plus de précisions, on se reportera cependant aux figures 3 à 6 qui illustrent le passage d'une position fermée et verrouillée à une position de pleine ouverture. En position fermée et verrouillée, le capot mobile 1 occupe la position représentée sur la figure 1 et les éléments de charnière 2 et de verrou occupent les positions plus clairement indiquées sur la figure 3. L'axe 11 est engagé dans le crochet 17 dans lequel il est également maintenu par la rampe de guidage 19 tandis que le crochet 17 est immobilisé et bloqué par l'ergot 10 de la bielle principale 4. Ce verrouillage est capable de résister à une forte pression uniforme sur la paroi interne du capot mobile 1. En effet, l'effort résultant tangentiel sur la bordure du capot 1 est compensé par le dispositif de verrouillage et blocage de l'axe 11. Comme représenté sur la figure 4, lorsque l'ouverture du capot 1 se trouve amorcée, les bielles secondaires 13 s'abaissent légèrement et le crochet 17 libéré par la bielle principale 4 pivote autour de son axe 18 sous l'effort de l'axe 11, jusqu'à atteindre la position représentée d'alignement des trois axes 6, 8 et 11. Au delà de cette position, le mouvement du capot 1 vers l'ouverture provoque une rotation en sens inverse des bielles secondaires 13 autour de leur axe fixe 15 pour atteindre la position intermédiaire représentée sur la figure 5 dans laquelle le quadrilatère des axes 6,8,11,15 est formé et l'axe 11 est complètement sorti du crochet 17 qui a été quitté par l'ergot 10 de la bielle principale 4. A la position de pleine ouverture du capot 1 et de la charnière 2 à la figure 6, la butée mécanique 16 arrête les bielles secondaires 13, limitant ainsi l'ouverture pour permettre un retour ultérieur à la position fermée. Dans l'exemple représenté et comme cela apparaît par exemple sur la figure 1a, la charnière 2 réalisée conformément à l'invention et associée au capot mobile 1 permet un grand angle d'ouverture tel que a et un mouvement supérieur à 100 degrés, ce qui procure une bonne accessibilité à l'ensemble protégé par le capot 1. On note également, par rapport à l'angle d'ouverture de charnière obtenu, un encombrement réduit d'une charnière telle que 2 dans le sens radial, ce qui constitue, notamment dans les applications aéronautiques, un avantage important.

Le mouvement et les différentes positions qui ont été décrites lors de l'ouverture se reproduisent dans le sens inverse lors de la fermeture. Notamment l'axe 11 vient s'engager dans le crochet 17, guidé par la face inclinée du crochet dans sa partie supérieure, jusqu'à ce que le crochet 17 vienne en butée sur l'ergot 10 de la bielle principale 4 dans la position représentée sur la figure 4. En fin de fermeture, pour atteindre la position représentée sur la figure 3, la rotation des bielles secondaires 13 est inversée et la bielle principale 4 assure la fermeture du crochet 17 par l'action de l'ergot 10 sur ledit crochet 17, l'ensemble étant alors verrouillé.

Quelques variantes peuvent être envisagées pour la réalisation de la charnière auto-verrouillable conforme à l'invention. Notamment, un ressort peut être adjoint au crochet 17 ou un dispositif d'amortissement en rotation peut-être placé sur l'axe 18 du crochet 17.

## Revendications

1. Charnière associée à un capot mobile (1), d'un type destiné à protéger en carrossant un ensemble mécanique, notamment comme partie d'une nacelle de moteur d'avion, comportant des moyens de fixation sur une ferrure fixe (3) et coopérant avec des moyens de verrouillage associés caractérisée en ce que ladite charnière (2) se compose d'une bielle principale (4) dont une première extrémité est articulée sur ladite ferrure (3) au moyen d'un axe (6) et une deuxième extrémité (7) est articulée sur ledit capot mobile (1) au moyen d'un axe (8) et d'au moins une bielle secondaire (13) également articulée à une extrémité au moyen d'un axe (15) sur ladite ferrure (3) et à l'autre extrémité, au moyen d'un axe (11), sur ledit capot mobile (1), lesdits quatre axes (5,7,11,15) étant disposés de manière que leurs traces respectives sur un plan coupant perpendiculairement les quatres axes forment les sommets d'un quadrilatère lorsque la charnière (2) se trouve en position d'ouverture et en ce que les moyens de verrouillage sont fixés sur ladite ferrure fixe (3) et comportent au moins un élément mobile (17) de verrou qui lors de la fermeture est susceptible d'emprisonner un élément (11) de ladite charnière (2) assurant son verrouillage et d'être bloqué par un autre élément (4) de ladite charnière (2).

2. Charnière de capot mobile selon la revendication 1 dans laquelle l'élément mobile de verrou est constitué par un crochet (17) mobile autour d'un axe (18) solidaire de ladite ferrure fixe (3).

3. Charnière de capot mobile selon la revendication 2 dans laquelle ledit crochet mobile (17) est associé à un dispositif d'amortissement en rotation autour de son axe ou à un ressort.

4. Charnière de capot mobile selon l'une quelconque des revendications 1 à 3 dans laquelle l'élément de charnière emprisonné par le verrou (17) est constitué par l'axe (11) d'articulation de la bielle secondaire (13) sur le capot mobile (1).

5. Charnière de capot mobile selon l'une quelconque des revendications 1 à 4 dans laquelle l'élément de charnière assurant le blocage de l'élément mobile (17) de verrou est constitué par un ergot (10) porté par l'extrémité (7) de la bielle principale (4) qui est articulée sur le capot mobile (1).

6. Charnière de capot mobile selon l'une quelconque des revendications 1 à 5 dans laquelle les moyens de verrouillage comportent en outre un élément fixé sur la ferrure fixe, associé à l'élément mobile de verrou et qui comporte une rampe de guidage (19) de l'élément (11) de charnière emprisonné par le verrou.

7. Charnière de capot mobile selon l'une quelconque des revendications 1 à 6 dans laquelle les bielles secondaires (13) sont au nombre de deux, l'extrémité (7) de la bielle principale (4) située du côté du capot mobile (1) venant se plaçer en position de fermeture, entre les deux dites bielles secondaires (13).

8. Charnière de capot mobile selon la revendication 7 dans laquelle la bielle principale (4) et les deux bielles secondaires (13) sont articulées sur une chape unique (9) solidaire dudit capot mobile (1) et portant leurs axes respectifs d'articulation (8,11).

9. Charnière de capot mobile selon l'une quelconque des revendications 1 à 8 dans laquelle la bielle secondaire (13) est arrêtée en position de pleine ouverture de la charnière par une butée (16) intégrée à ladite ferrure fixe (3).

## Patentansprüche

1. Scharnier für eine bewegliche Abdeckhaube (1), die insbesondere als Teil einer Flugzeugmotorgondel zur Umkleidung und damit zum Schutz einer mechanischen Einheit bestimmt ist, mit Mitteln zur Befestigung an einem festen Beschlagteil (3), die mit zugeordneten Verriegelungsmitteln zusammenwirken, **dadurch gekennzeichnet**, daß das Scharnier (2) zusammengesetzt ist aus einem Hauptschwinghebel (4), der mit einem ersten Ende mittels einer Achse (6) an dem Beschlagteil (3) und mit einem zweiten Ende mittels einer Achse (8) an der beweglichen Abdeckhaube (1) angelenkt ist, und aus wenigstens einem sekundären Schwinghebel (13), der ebenfalls mit einem Ende mittels einer Achse (15) an dem Beschlagteil (3) und mit dem anderen Ende mittels einer Achse (11) an der beweglichen Abdeckhaube (1) angelenkt ist, wobei die vier Achsen (5, 7, 11, 15) so angeordnet sind, daß ihre Spuren in einer Ebene, die die Achsen lotrecht schneidet, die Spitzen eines Vierecks bilden, wenn sich das Scharnier (2) in Öffnungsstellung befindet, und daß die Verriegelungsmittel an dem festen Beschlagteil (3) befestigt sind und wenigstens ein bewegliches Riegelelement (17) umfassen, das beim Verschließen ein Element (11) des Scharniers (2) umfassen kann und dabei das Verriegeln des Scharniers bewirkt, und daß dieses bewegliche Element (11) durch ein anderes Element (4) des Scharniers (2) blockierbar ist.

2. Scharnier für eine bewegliche Abdeckhaube nach Anspruch 1, bei dem das bewegliche Riegelelement aus einem Haken (17) besteht, der um eine mit dem festen Beschlagteil (3) fest verbundene Achse (18) bewegbar ist.

3. Scharnier für eine bewegliche Abdeckhaube nach Anspruch 2, bei dem dem beweglichen Haken (17) eine Vorrichtung zur Dämpfung der Drehbewegung um seine Achse oder eine Feder zugeordnet ist.

4. Scharnier für eine bewegliche Abdeckhaube nach einem der Ansprüche 1 bis 3, bei dem das von dem Riegelelement (17) umfaßte Element des Scharniers die Achse (11) ist, mit der der sekundäre Schwinghebel (13) an der beweglichen Abdeckhaube (1) angelenkt ist.

5. Scharnier für eine bewegliche Abdeckhaube nach einem der Ansprüche 1 bis 4, bei dem das Element des Scharniers, das die Blockierung des beweglichen Riegelelements (17) bewirkt, aus einem Vorsprung (10) besteht, der von dem Ende (7) des Hauptschwinghebels (4) getragen ist, das an der beweglichen Abdeckhaube (1) angelenkt ist.

6. Scharnier für eine bewegliche Abdeckhaube nach einem der Ansprüche 1 bsi 5, bei dem die Verriegelungsmittel außerdem ein festes Element an dem festen Beschlagteil umfassen, das dem beweglichen Riegelelement zugeordnet ist und eine Führungsrampe (19) für das von dem Riegelelement umfaßte Element (11) des Scharniers aufweist.

7. Scharnier für eine bewegliche Abdeckhaube nach einem der Ansprüche 1 bis 6, bei dem zwei sekundäre Schwinghebel (13) vorgesehen sind, und bei dem das auf der Seite der beweglichen Abdeckhaube (1) liegende Ende (7) des Hauptschwinghebels (4) sich in Schließstellung zwischen den beiden sekundären Schwinghebeln (13) anordnet.

8. Scharnier für eine bewegliche Abdeckhaube nach Anspruch 7, bei dem der Hauptschwinghebel (4) und die beiden sekundären Schwinghebel (13) an einem einzigen Gabelbügel (9) angelenkt sind, der mit der beweglichen Abdeckhaube (1) fest verbunden ist und ihre jeweiligen Gelenkachsen (8, 11) trägt.

9. Scharnier für eine bewegliche Abdeckhaube nach einem der Ansprüche 1 bis 8, bei dem der sekundäre Schwinghebel (13) in voller Öffnungsstellung des Scharniers durch einen Anschlag (16) arretiert wird, der in das genannten feste Beschlagteil (3) integriert ist.

**Claims**

1. Hinge combined with a movable hood (1), of a type intended for protecting a mechanical assembly, whilst providing bodywork for it, especially as a portion of a nacelle of an aeroplane engine, comprising means for fastening to a stationary fixture (3) and interacting with associated locking means, characterised in that the said hinge (2) is composed of a main connecting rod (4), a first end of which is articulated on the said fixture (3) by means of a pin (6) and a second end (7) is articulated on the said movable hood (1) by means of a pin (8), and of at least one secondary connecting rod (13) also articulated at one end by means of a pin (15) on the said fixture (3) and at the other end by means of a pin (11) on the said movable hood (1), the said four pins (5, 7, 11, 15) being arranged in such a manner that their respective loci on a plane perpendicularly cutting the four pins form the apices of a quadrilateral when the hinge (2) is in the open position, and in that the locking means are fastened to the said stationary fixture (3) and comprise at least one movable latch element (17) which upon closure is capable of trapping an element (11) of the said hinge (2) providing its locking and of being locked by another element (4) of the said hinge (2).

2. Movable hood hinge according to Claim 1, in which the movable latch element is composed of a hook (17) movable about a pin (18) securely fastened to the said stationary fixture (3).

3. Movable hood hinge according to Claim 2, in which the said movable hook (17) is combined with a rotational shock-absorbing device about its pin, or with a spring.

4. Movable hood hinge according to any one of Claims 1 to 3, in which the hinge element trapped by the latch (17) is composed of the articulation pin (11) of the secondary connecting rod (3) on the movable hood (1).

5. Movable hood hinge according to any one of Claims 1 to 4, in which the hinge element ensuring the locking of the movable latch element (17) is composed of a stud (10) carried by the end (7) of the main connecting rod (4) which is articulated on the movable hood (1).

6. Movable hood hinge according to any one of Claims 1 to 5, in which the locking means additionally comprise an element fastened to the stationary fixture, which element is combined with the movable catch element and comprises a ramp (19) for guiding the hinge element (11) trapped by the latch.

7. Movable hood hinge according to any one of Claims 1 to 6, in which the secondary connecting rods (13) are two in number, the end (7) of the main connecting rod (4) situated on the movable hood (1) side being positioned, in the closure position, between the said two secondary connecting rods (13).

8. Movable hood hinge according to Claim 7, in which the main connecting rod (4) and the two secondary connecting rods (13) are articulated on a single clevis (9) securely fastened to the said movable hood (1) and carrying their respective articulation pins (8, 11).

9. Movable hood hinge according to any one of Claims 1 to 8, in which the secondary connecting rod (13) is stopped in the wide-open position of the hinge by a stop (16) integrated in the said stationary fixture (3).

FIG : 1

FIG : 1a

FIG : 2

FIG: 4

FIG: 3

FIG : 6

FIG : 5